# EUROPÄISCHE PATENTSCHRIFT

(11) **EP 2 327 599 B1**
(45) Veröffentlichungstag und Bekanntmachung des Hinweises auf die Patenterteilung: **03.05.2017**
(21) Anmeldenummer: 10014597.8
(22) Anmeldetag: 13.11.2010
(51) Int. Cl.: B60W 40/10, B60W 30/16, B60W 50/12, B60K 28/10

(54) **Verfahren zum Betreiben eines Kraftfahrzeugs**
Method for operating a motor vehicle
Procédé destiné au fonctionnement d'un véhicule automobile

(30) Priorität: 27.11.2009 DE 102009055967
(43) Veröffentlichungstag der Anmeldung: 01.06.2011
(73) Patentinhaber: Audi AG, 85045 Ingolstadt (DE)
(72) Erfinder: Holzmann, Manfred, 91171 Greding (DE); Breu, Alexander, 93495 Weiding (DE)
(74) Vertreter: Thielmann, Frank

(56) Entgegenhaltungen:
- EP-A2- 2 028 632
- WO-A2-2008/149199
- DE-A1- 10 152 632
- DE-A1- 19 838 885
- DE-A1-102005 036 217
- DE-A1-102007 019 479
- DE-A1-102007 023 929
- FR-A1- 2 789 950
- GB-A- 2 295 695

## Beschreibung

Die Erfindung betrifft ein Verfahren zum Betreiben eines Kraftfahrzeugs in einem Modus, bei dem das Kraftfahrzeug seine Geschwindigkeit selbsttätig festlegt.

Typischerweise wird der Modus durch Betätigung eines Tempomatschalters seitens des Fahrzeugführers eingestellt, wobei über den Tempomatschalter eine Wunschgeschwindigkeit eingestellt wird. Das Kraftfahrzeug verfügt hierbei über ein Assistenzsystem, das seinen Abstand zu einem vorausfahrenden Fahrzeug regelt. Insbesondere fährt das Kraftfahrzeug dann langsamer als mit der Wunschgeschwindigkeit, wenn sonst sein Abstand zu einem vorausfahrenden Fahrzeug übermäßig verringert werden würde und die Gefahr eines Auffahrens drohte.

Es ist aus dem Stand der Technik bekannt, dass das Kraftfahrzeug bei Einsatz einer Regelung des Abstands zu einem vorausfahrenden Fahrzeug bis zum Stillstand in dem Abstandsregelmodus verbleiben kann, insbesondere wenn das vorausfahrende Fahrzeug ebenfalls zum Stillstand kommt, und dass das Kraftfahrzeug dann seine Fahrt selbsttätig wieder aufnimmt, wenn das andere Kraftfahrzeug ebenfalls wieder losfährt. Wenn das Kraftfahrzeug bis zum Stillstand automatisch betrieben wird, besteht die Gefahr, dass ein Kraftfahrzeuginsasse durch eine Handlung eine gefährliche Situation herbeiführt, z. B. die Tür des Kraftfahrzeugs öffnet, um auszusteigen; hier droht dann die Gefahr, dass sich gerade im Moment des Aussteigens das Kraftfahrzeug wieder zu bewegen beginnt, möglicherweise sogar ohne den Fahrzeugführer.

Aus der DE 10 2007 019 479 A1 ist es bekannt, eine Aktivierung eines Abstandsregelungssystems zu verhindern, wenn der Fahrersitz des Fahrzeugs nicht belegt ist oder auch wenn der Sicherheitsgurt des Fahrers nicht angelegt ist. Bei einem Kraftfahrzeug gemäß der DE 195 44 925 A1 wird durch gesonderte Schaltungen erfasst, ob eine Türe des Kraftfahrzeugs offen ist, ob der Fahrersitz belegt ist, oder ob sich das Getriebe in einer FAHRT-Stellung befindet. Steht das Kraftfahrzeug, wird dem Fahrer die Gelegenheit gegeben, einen sicheren Zustand wieder herzustellen.

Aus der EP 2 028 632 A2 ist ein Verfahren bekannt zur automatischen Längsführung eines Kraftfahrzeugs mittels eines längsführenden Fahrerassistenzsystems mit Stop&Go-Funktion umfassend eine Erfassungseinrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand gebremst und bei Erfassung der erneuten Anfahrt des vorausfahrenden Fahrzeugs gegebenenfalls in Abhängigkeit eines vom Fahrer über eine Eingabeeinrichtung gebbaren Bestätigungssignals automatisch wieder angefahren wird, wobei zumindest ab dem Zeitpunkt des Stillstands des Kraftfahrzeugs kontinuierlich das Fahrzeugvorfeld mittels einer Überwachungseinrichtung auf etwaige im Fahrzeugvorfeld befindliche Hindernisse überwacht wird, wobei die Überwachungseinrichtung eine kontinuierlich das Fahrzeugvorfeld zeigende Einzelbilder liefernde Bildaufnahmeeinrichtung umfasst, wobei zur Hinderniserfassung entweder Differenzbilder aus jeweils einem ersten Einzelbild und einem zeitlich danach aufgenommenen zweiten Einzelbild erzeugt und ausgewertet werden, oder wobei zur Hinderniserfassung die Vektoren des optischen Flusses der Bildinformation zumindest eines Teils der Bildpunkte zweier zeitlich nacheinander aufgenommener, sich aus Bildpunkten zusammensetzender Einzelbildern ermittelt und ausgewertet werden.

Die DE 10 2005 036 217 A1 offenbart eine Vorrichtung, bei welcher zur Sicherstellung des Stillstandes eines Kraftfahrzeuges mit einem in mindestens einem elektronischen Steuergerät enthaltenen abstandsbezogenen Längsdynamikregelmodul, durch das das Kraftfahrzeug unter Einhaltung eines bestimmten Abstandes zu einem Zielobjekt bis zum Stillstand abgebremst wird, zumindest bis zum Erreichen des Stillstandes vom Längsdynamikregelmodul an ein Bremsregelmodul ein Sollbremsmoment vorgegeben wird. Zu einem definierten ersten Zeitpunkt nach erkanntem Stillstand des Kraftfahrzeuges wird vom Längsdynamikregelmodul ein Übergabesignal an das Bremsregelmodul übermittelt. Daraufhin hält das Bremsregelmodul unabhängig von der Vorgabe eines Sollbremsmoments durch das Längsdynamikregelmodul selbstständig ein Radbremsmoment im Sinne einer Feststellbremsfunktion aufrecht. Zu einem definierten zweiten Zeitpunkt nach einem Anfahrbefehl gibt das Längsdynamikregelmodul, beginnend mit dem zu diesem Zeitpunkt vorliegenden Istbremsmoment, wieder selbst ein Sollbremsmoment zum Abbau des Radbremsmoments vor.

Von der DE 198 38 885 A1 wird ein Verfahren und eine Vorrichtung zur Sicherstellung des Stillstandes eines Fahrzeuges, insbesondere in Verbindung mit einer Steuerung der Geschwindigkeit des Fahrzeuges, vorgeschlagen, wobei bei erkanntem Stillstand des Fahrzeuges Bremskraft zur Realisierung einer Feststellbremse aufgebaut und/oder ein Getriebe in Parkstellung geschaltet wird, wobei die Bremskraft bzw. die Getriebeposition auch dann aufrechterhalten wird, wenn die Versorgungsspannung für die elektrischen Systeme des Fahrzeuges abgeschaltet ist.

Die GB 2 295 695 A offenbart ein Geschwindigkeitsregelungssystem für ein Straßenfahrzeug mit Mitteln zur Aufstellung einer Reihe von Verriegelungsbedingungen, die im Unterbrechungsfall das Geschwindigkeitsregelungssystem dazu veranlassen, einen Zwischenzustand anzunehmen, in dem das Geschwindigkeitsregelungssystem eingerichtet ist, deaktiviert zu werden, wenn das Fahrzeug noch in Bewegung ist, und das Geschwindigkeitsregelungssystem eingerichtet ist, das Fahrzeug im Stillstand zu halten, wenn das Fahrzeug stationär ist, bis entweder durch den Fahrer übersteuert oder durch den Fahrer positiv neu ausgewählt wird. Die Verriegelungsbedingungen können Abwesenheit des Fahrers, Tür offen oder Gangstellung nicht auf Fahrt enthalten.

Aus der FR 2 789 950 A1 ist eine Onboard-Startfreigabe-Vorrichtung eines Fahrzeugs mit einer Zentraleinheit bekannt, an die Sensoren, einschließlich eines Geschwindigkeitssensors, und ein Ausgangsanschluss zum Senden eines Signals an eine Steuereinheit angeschlossen sind. Wenn der Geschwindigkeitssensor an die Zentraleinheit anzeigt, dass das Fahrzeug stillsteht, verarbeitet die Zentraleinheit Signale über einen Zustand des Fahrzeugs, welche von ersten Sensoren gesendet werden, und Signale über die Wachsamkeit des Fahrers des Fahrzeugs, welche von zweiten Sensoren gesendet werden, so dass sie über den Ausgangsanschluss ein Signal übermittelt, welches eine Startfreigabe oder eine Startsperre des Fahrzeugs bedeutet.

Die DE 101 52 632 A1 betrifft ein Kraftfahrzeug mit einem Geschwindigkeitsregler und einer Abstandssensorik, welche insbesondere auch im Stop-und-Go-Betrieb automatisch einen Mindestabstand zu einem vorausfahrenden Fahrzeug einhält, sowie mit einem hilfskraftbetätigten Bremssystem, insbesondere einem solchen, welches die Funktion einer Feststellbremse ausführen kann. Erfindungsgemäß wird bei automatischem Abbremsen bis zum Stillstand des Fahrzeugs für das Überschreiten einer zeitlich definierten Stillstandsphase die Feststell-Bremsfunktion aktiviert, bei der soviel Bremskraft eingesteuert wird, dass das Fahrzeug auch auf einer geneigten Fahrbahn zuverlässig gehalten wird, und es wird diese Feststell-Bremsfunktion unmittelbar vor Beginn der folgenden Anfahrphase wieder automatisch deaktiviert. Diese Feststell-Bremsfunktion kann nur dann deaktiviert werden, wenn zumindest eine von mehreren Voraussetzungen erfüllt ist. Um ein kontrolliertes Vorwärtsrollen des Fahrzeugs zu realisieren, kann die FeststellBremsfunktion kurzzeitig teilweise ganz oder deaktiviert werden, wenn der Fahrer des Fahrzeugs das Fahrzeug-Gaspedal oder dgl. und/oder das Fahrzeug-Bremspedal oder dgl. kurzzeitig und/oder nur wenig niederdrückt, während beim folgenden Loslassen des Gaspedals und/oder des Bremspedals unmittelbar die Feststell-Bremsfunktion aktiviert wird.

Eine Folgeabstand-Steuervorrichtung, welche aus der WO 2008/149199 A2 bekannt ist, umfasst eine Fahrzeuggeschwindigkeits-Erfassungseinrichtung, die die Fahrzeuggeschwindigkeit eines eigenen Fahrzeugs erfasst, und eine Fahrzeuggeschwindigkeit, die gleich oder geringer als eine vorgegebene Geschwindigkeit ist, als Null ausgibt, eine Folgeabstands-Erkennungsvorrichtung, die einen Folgeabstand zwischen einem vorausfahrenden Fahrzeug und dem eigenen Fahrzeug erkennt, eine erste Berechnungsvorrichtung einer angeforderten Beschleunigung, die eine angeforderte Beschleunigung aus der Fahrzeuggeschwindigkeit und dem Folgeabstand berechnet, und eine Stillstandsermittlungsvorrichtung, die das Anhalten des eigenen Fahrzeugs auf der Grundlage einer angeforderten Beschleunigung zu einem Zeitpunkt, wenn der Ausgabewert der Fahrzeuggeschwindigkeitserfassungseinrichtung Null wird, ermittelt.

Ein in der DE 10 2007 023 929 A1 offenbartes Verfahren zum Anfahren eines Kraftfahrzeugs, welches durch eine fahrerunabhängig aufrechterhaltene Bremskraft auf einer geneigten Fahrstrecke im Stillstand gehalten wird, verringert nach Verstreichen einer vorbestimmten Haltezeit allmählich die fahrerunabhängig erzeugte Bremskraft, um das Kraftfahrzeug in Bewegung zu versetzen und steuert anschließend die Bewegung des Kraftfahrzeugs entsprechend einem vorgegebenen Verlauf.

Bisherige Abstandsregelungssysteme verwenden die in einem Kraftfahrzeug ohnehin zur Verfügung stehende Informationen über einen Stillstand des Kraftfahrzeugs. So gibt insbesondere dasjenige Fahrerassistenzsystem, das für ein stabiles Fahren des Kraftfahrzeugs sorgt, z. B. vermittels Brems- und Beschleunigungseingriffen, eine Information über den Stillstand des Kraftfahrzeugs aus, indem eine ganz bestimmtes Zustandssignal gesetzt wird. Das Fahrerassistenzsystem verwendet hierbei Signale von Drehzahlsensoren an Rädern des Kraftfahrzeugs. Es werden diese Signale unmittelbar analysiert, ohne dass weitere Rechnungen mit Hilfe der Signale erfolgen. Es wird ganz einfach erfasst, ob sich das Rad weiterdreht oder nicht. Das Fahrerassistenzsystem setzt dann eine entsprechende Flag auf "1", wenn das Fahrzeug im Stillstand befindlich ist.

Trotz Bemühungen im Stand der Technik, eine möglichst hohe Sicherheit zu schaffen, besteht Raum für Verbesserungen. Es ist daher Aufgabe der Erfindung, einen Weg aufzuzeigen, die Zuverlässigkeit zu erhöhen, mit der Fahrzeuginsassen bei einem Kraftfahrzeug mit Abstandsregelung vor Gefahren geschützt sind.

Die Aufgabe wird durch ein Verfahren mit den Merkmalen gemäß Patentanspruch 1 gelöst.

Bei einem erfindungsgemäßen Verfahren wird somit aus Signalimpulsen, die zumindest ein Drehzahlsensor an einem Rad des Kraftfahrzeugs abgibt, ein Wert für die Kraftfahrzeuggeschwindigkeit ermittelt, und es wird eine Situation als Stillstand behandelt, bei der der ermittelte Wert einen vorbestimmten Wert unterschreitet und insbesondere dann bei Eintreten eines bestimmten Ereignisses der Modus verlassen, bei dem das Kraftfahrzeug seine Geschwindigkeit selbsttätig festlegt.

Es hat sich erwiesen, dass die Feststellung des Stillstands anhand der Kraftfahrzeuggeschwindigkeit besonders zuverlässig ist, so dass eine Fehlfunktion aufgrund einer Fehlmeldung mit verringerter Wahrscheinlichkeit eintritt, so dass die Gefahren für die Fahrzeuginsassen klein sind.

Als vorbestimmten Wert eignet sich jeder Wert von unterhalb von 1 km/h, wobei bei einer Ausführungsform der vorbestimmte Wert genau 1 km/h beträgt. Besonders bevorzugt ist es aber, wenn der vorbestimmte Wert der minimal messbare Wert ist, denn dann wird der tatsächliche Stillstand des Kraftfahrzeugs erfasst, die Realität also am Besten abgebildet.

Weiterhin wird durch ein Fahrerassistenzsystem, welches Eingriffe in den Betrieb des Kraftfahrzeugs zum Zwecke von dessen Stabilisierung bei seiner Fahrt verursacht, eine Information über den Stillstand des Kraftfahrzeugs erhalten. Eine Situation wird auch dann als Stillstand behandelt, wenn diese Information einen Stillstand des Kraftfahrzeugs angibt.

Mit anderen Worten tritt die bisherige Vorgehensweise, Informationen des eine Stabilität des Kraftfahrzeugs bewirkenden Fahrerassistenzsystems auszuwerten, ergänzend zu der erfindungsgemäßen Vorgehensweise. In beiden Fällen werden Signale des Drehzahlsensors verarbeitet, einmal aber wird aus Signalimpulsen die Kraftfahrzeuggeschwindigkeit ermittelt, ein andermal wird lediglich ermittelt, ob sich die Räder drehen oder nicht.

Beide Informationen werden in dem Kraftfahrzeug durch die einzelnen Hardware- und Softwarebausteine durch Setzen von Zustandssignalen (Flags) kommuniziert. So wird bei Unterschreiten des vorbestimmten Werts durch den ermittelten Wert für die Kraftfahrzeuggeschwindigkeit ein erstes Zustandssignal auf "1" gesetzt, und durch das Fahrerassistenzsystem wird bei erfasstem Stillstand ein zweites Zustandssignal auf "1" gesetzt, wobei der Modus dann verlassen wird, wenn zumindest eines der Zustandssignale auf "1" gesetzt ist und ein vorbestimmtes Ereignis erfasst ist bzw. wird.

Somit werden die beiden Flags einer "Oder"-Operation unterworfen, mit nicht ausschließendem Oder. Nur in dem Fall, dass keine der beiden Flags auf "1" gesetzt wird, also beide Flags auf "0" gesetzt werden, wird der Modus beibehalten, auch wenn das vorbestimmte Ereignis eintritt. Durch die Redundanz ist eine besonders hohe Systemsicherheit gegeben.

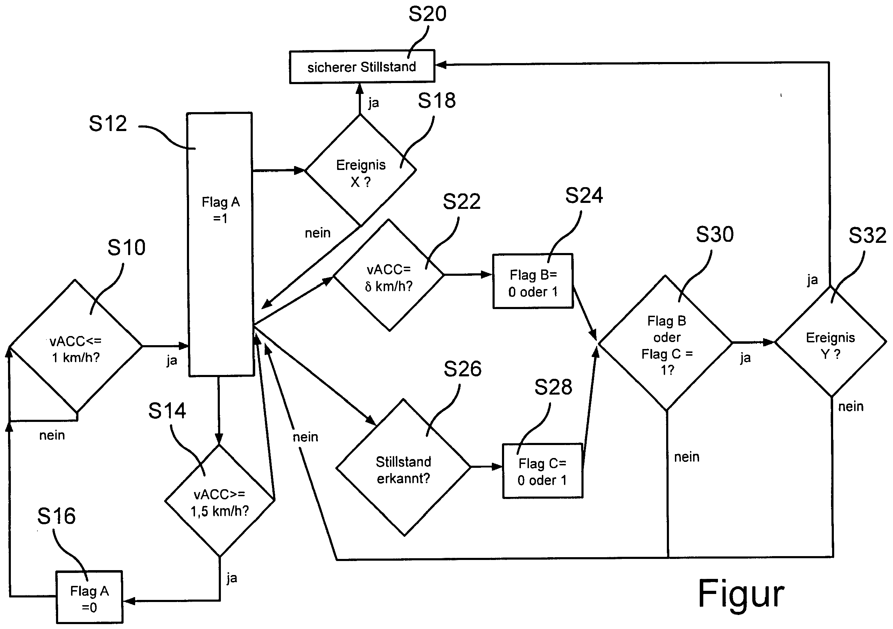

Nachfolgend wird eine bevorzugte Ausführungsform der Erfindung unter Bezug unter die Zeichnung geschrieben, in der die einzige Figur ein Flussschaubild zur Erläuterung des erfindungsgemäßen Verfahrens ist.

Ausgangspunkt für das anhand der Figur nachfolgend erläuterte Verfahren ist, dass ein Kraftfahrzeug mit einem Abstandsregelungssystem ausgestattet ist und sich in Fahrt befindet.

Das Verfahren beginnt damit, dass während der Fahrt gemäß Schritt S10 ständig geprüft wird, ob die Geschwindigkeit v kleiner oder gleich 1 km/h beträgt. Die Geschwindigkeit wird hierbei durch das Abstandsregelungssystem ("ACC") ständig aufgrund von Signalen eines oder mehrerer Drehzahlsensoren an jeweils einem Rad des Kraftfahrzeugs ermittelt.

Solange die Prüffrage gemäß Schritt S10 mit "Nein" beantwortet wird, wird sie nach Ablauf einer vorbestimmten Zeitdauer abermals gestellt.

Sobald die Prüffrage mit "Ja" beantwortet wird, wird gemäß Schritt S12 ein ganz bestimmtes Zustandssignal, hier als "Flag A" bezeichnet, auf "1" gesetzt. Dieses Zustandssignal gibt an, dass sich das Kraftfahrzeug mit nur noch geringer Geschwindigkeit bewegt. Es wird dann regelmäßig geprüft, ob das Kraftfahrzeug wieder schneller wird, z. B. die Geschwindigkeit von v >= 1,5 km/h einnimmt, siehe Schritt S14. Sobald diese Frage mit "Ja" beantwortet wird, wird Flag A wieder auf Null gesetzt, siehe Schritt S16, und die Prüfung gemäß S10 wird wieder aufgenommen. Die in der Figur angegebene Geschwindigkeiten von 1 km/h bzw. 1,5 km/h sollen nicht als einschränkend verstanden werden. Jegliche gewünschte Art von Grenzgeschwindigkeit kann gewählt werden, wobei sich vorliegend für die Schwellgeschwindigkeit im Schritt S10 Geschwindigkeiten von größer 0 bis 5 km/h eignen, und wobei die in Schritt S14 angegebene Geschwindigkeit um zwischen 0,25 und 1 km/h höher als diese Schwellgeschwindigkeit liegen sollte.

Wir gehen nun von der Situation aus, dass Flag A auf "1" gesetzt bleibt. Im Schritt S18 wird geprüft, ob ein bestimmtes Ereignis ("Ereignis X") eingetreten ist oder nicht. Beispielsweise kann es sich darum handeln, dass die Tür des Kraftfahrzeugs geöffnet wird. Dies ist möglich, weil ein Fahrzeuginsasse bei Unterschreiten einer Geschwindigkeit von 1 km/h das Kraftfahrzeug als stehend betrachten könnte und davon ausgehen könnte, dass er das Fahrzeug gefahrlos verlassen kann. Tritt dieses Ereignis gemäß Schritt S18 also ein, wird zum Schritt S20 übergangen: Das Kraftfahrzeug wird in einen Zustand des sicheren Stillstands versetzt. Sofern das Kraftfahrzeug noch eine Restgeschwindigkeit hat, wird es gegebenenfalls gebremst, und es wird durch das System z. B. auch die Parkbremse betätigt oder die Parkstellung des Getriebes eingenommen. Zudem wird mit dem Einnehmen des Zustands des sicheren Stillstands der vorherige Modus verlassen, demgemäß auf den Abstand eines vorausfahrenden Kraftfahrzeugs geregelt wird. Insbesondere ist dafür gesorgt, dass das Kraftfahrzeug nicht wieder losfahren kann. Dadurch ist die Situation geschaffen, dass Fahrzeuginsassen gefahrlos das Kraftfahrzeug verlassen können, wenn sie die Kraftfahrzeugtür zuvor geöffnet haben.

Unabhängig von der Durchführung der Schritte S14, S18 wird vom Schritt S12 zu den Schritten S22 und S26 übergegangen. In Schritt S22 wird überprüft, ob die von dem Abstandsregelungssystem wie oben beschrieben ermittelte Geschwindigkeit einen Minimalwert erreicht hat. Dieser ist vorliegend mit δ km/h angegeben, es handelt sich um die kleinstmögliche mit Bits darstellbare endliche Geschwindigkeit. Ist diese kleinstmögliche Geschwindigkeit erreicht oder unterschritten (v = 0), wird ein weiteres Zustandssignal "Flag B" auf "1" gesetzt. Ist sie nicht erreicht, wird es auf "0" gesetzt. Das Setzen des Zustandssignals erfolgt in Schritt S24.

In Schritt S26 wird nun eine andere Art von Information ausgenutzt: Ein Fahrerassistenzsystem, das für die sichere Fahrt des Kraftfahrzeugs (Stabilität) sorgt, ermittelt ebenfalls ob das Kraftfahrzeug sich im Stillstand befindet. Diese befolgt ebenfalls von Signalen der Drehzahlsensoren, ohne dass allerdings die Geschwindigkeit explizit abgeleitet wird. Als Information steht somit lediglich zur Verfügung, ob ein Stillstand vorliegt oder nicht. Je nach dem Ergebnis wird ein weiteres Zustandssignal, "Flag C", auf "1" gesetzt oder nicht. In Schritt S30 wird dann geprüft, ob zumindest eines der Zustandssignale auf "1" gesetzt ist (es wird also ein Oder-Gatter eingesetzt, mit nicht ausschließendem "Oder").

Soweit keines der beiden Zustandssignale auf "1" gesetzt ist, die Prüffrage in Schritt S30 also mit "Nein" beantwortet wird, kann davon ausgegangen werden, dass das Kraftfahrzeug noch nicht im vollständigen Stillstand befindlich ist. Dann werden regelmäßig die Schritte S22 und S26 wiederholt (wie auch die Schritte S14 und S18).

Wird die Prüffrage in Schritt S30 mit "Ja" beantwortet, wird in Schritt S32 geprüft, ob ein bestimmtes Ereignis ("Ereignis Y") eingetreten ist oder nicht. Es kann sich hierbei um das Ereignis handeln, dass der Motor abgestorben ist. So lange dies nicht der Fall ist, werden nach wie vor die Schritte S22, S26, S14 und S18 immer wieder wiederholt. Sobald das Ereignis eingetreten ist, wird zum Schritt S20 übergegangen, demgemäß das Kraftfahrzeug in den Zustand "sicherer Stillstand" versetzt wird. Ausgehend vom Ereignis Y bedeutet dies, dass insbesondere der Modus beendet wird, bei dem das Kraftfahrzeug durch das Abstandsregelungssystem geführt wird, damit es stets einen vorbestimmten Abstand zu einem vorausfahrenden Kraftfahrzeug einhält. Durch das Einnehmen des Zustands "sicherer Stillstand" ist daher gewährleistet, dass das Kraftfahrzeug nicht selbsttätig losfährt, wenn die Fahrzeuginsassen damit rechnen, dass es stehen bleibt und entsprechend handeln.

Die genannten Beispiele für das Ereignis "X" (Türöffnen) und das Ereignis "Y" (Absterben des Motors) sollen nicht einschränkend verstanden werden. Die Buchstaben "X" in S18 und "Y" in S32 stehen jeweils repräsentativ für eine ganze Klasse von Ereignissen. Es kann Ereignisse geben, die sowohl unter die Klasse "X" als auch "Y" fallen, z. B. kann als Ereignis X auch ein Lösen eines Gurts durch einen Fahrzeuginsassen oder zumindest den Fahrzeugführer angesehen werden und dieses kann gleichzeitig auch ein Ereignis Y gemäß Schritt S32 sein.

Zusammenfassend gesagt: Es gibt eine Kombination von gesetztem Zustandssignal Flag A und eingetretenem Ereignis X, bei dem der Zustand des sicheren Stillstands S20 eingenommen wird. Es gibt ferner die Situation, dass ein weiteres Ereignis Y eintritt und zumindest ein weiteres Zustandssignal Flag B oder C gesetzt ist, auch bei dieser Kombination von Zustandssignal und Ereignis wird der sichere Stillstand eingenommen.

Die jeweiligen Kombinationen von Zustandssignal und Ereignis sind optimal auf die Bedürfnisse der Fahrzeuginsassen abgestimmt. Es wird dadurch der Fahrkomfort erhöht.

## Patentansprüche

1. Verfahren zum Betreiben eines Kraftfahrzeugs in einem Modus, bei dem das Kraftfahrzeug seine Geschwindigkeit (v) selbsttätig festlegt, wobei bei Erreichen (S10) eines Stillstands des Kraftfahrzeugs auf das Eintreten (S18) eines vorbestimmten Ereignisses (X) geprüft wird, und falls ein solches Ereignis (X) erfasst wird, der Modus verlassen wird, damit der Stillstand dauerhaft bestehen bleibt (S20), wobei aus Signalimpulsen, die zumindest ein Drehzahlsensor an einem Rad des Kraftfahrzeugs abgibt, ein Wert für die Kraftfahrzeuggeschwindigkeit (v) ermittelt wird und eine Situation als Stillstand behandelt wird (S10), bei der der ermittelte Wert einen vorbestimmten Wert unterschreitet, **dadurch gekennzeichnet, dass** durch ein Fahrerassistenzsystem, welches Eingriffe in den Betrieb des Kraftfahrzeugs zum Zwecke von dessen Stabilisierung bei seiner Fahrt verursacht, eine Information über den Stillstand des Kraftfahrzeugs erhalten wird (S26), und wobei eine Situation auch dann als Stillstand behandelt wird, wenn die Information einen Stillstand des Kraftfahrzeugs angibt, wobei bei Unterschreiten des vorbestimmten Werts ein erstes Zustandssignal (Flag A) auf "1" gesetzt wird (S12), bei Erreichen oder Unterschreiten einer kleinstmöglichen darstellbaren endlichen Geschwindigkeit (ö km/h) ein drittes Zustandssignal (Flag B) auf "1" gesetzt wird (S24) und durch das Fahrerassistenzsystem bei Erfassen des Stillstands ein zweites Zustandssignal (Flag C) auf "1" gesetzt wird (S28), wobei der Modus verlassen wird, wenn zumindest eines des zweiten (Flag C) und des dritten Zustandssignals (Flag B) auf "1" gesetzt ist (S30) und ein weiteres Ereignis (Y) erfasst ist bzw. wird (S32).

2. Verfahren nach Anspruch 1,
**dadurch gekennzeichnet, dass**
der vorbestimmte Wert höchstens 1 km/h beträgt.

3. Verfahren nach Anspruch 1 oder 2,
**dadurch gekennzeichnet, dass**
der vorbestimmte Wert der minimal messbare Wert ist.

## Claims

1. Method for operating a motor vehicle in a mode in which the motor vehicle independently determines its speed (v), wherein when a stoppage of the motor vehicle is reached (S10), the occurrence (S18) of a predetermined event (X) is checked, and, if such an event (X) is detected, the mode is left so that the stopped state permanently remains (S20),
wherein,
from signal pulses which at least one speed sensor at a wheel of the motor vehicle emits, a value for the motor vehicle speed (v) is established and a situation in which the established value falls below a predetermined value is treated as a stoppage (S10),
**characterised in that**
by means of a driver assistance system which performs interventions in the operation of the motor vehicle for the purposes of the stabilisation thereof during the travel thereof, information relating to the stoppage of the motor vehicle is obtained (S26), and wherein a situation is also then treated as a stoppage when the information indicates a stoppage of the motor vehicle, wherein, when a value falls below the predetermined value, a first status signal (Flag A) is set to "1" (S12), when a value reaches or falls below a lowest possible representable finite speed (δ km/h), a third status signal (Flag B) is set to "1" (S24) and, by the driver assistance system when the stoppage is detected, a second status signal (Flag C) is set to "1" (S28), wherein the mode is left if at least one of the second status signal (Flag C) and the third status signal (Flag B) is set to "1" (S30) and another event (Y) is or becomes detected (S32).

2. Method according to claim 1,
**characterised in that**
the predetermined value is a maximum of 1 km/h.

3. Method according to claim 1 or 2,
**characterised in that**
the predetermined value is the minimum value which can be measured.

## Revendications

1. Procédé pour faire fonctionner un véhicule automobile dans un mode, dans lequel le véhicule automobile spécifie de manière autonome sa vitesse (v), procédé dans lequel l'occurrence (S18) d'un événement prédéterminé (X) est vérifiée lorsqu'une immobilisation du véhicule automobile est atteinte (S10) et dans lequel, si un événement (X) de ce type est détecté, le mode est quitté pour que l'immobilisation soit conservée en permanence (S20),
dans lequel,
à partir d'impulsions de signal que délivre au moins un capteur tachymétrique au niveau d'une roue du véhicule automobile, une valeur pour la vitesse de véhicule automobile (v) est déterminée et une situation est traitée comme une immobilisation (S10) lors de laquelle la valeur déterminée est inférieure à une valeur prédéterminée,
**caractérisé en ce**
**qu'**une information concernant l'immobilisation du véhicule automobile est obtenue (S26) par un système d'aide à la conduite qui provoque des interventions dans le fonctionnement du véhicule automobile en vue de le stabiliser lors de sa circulation, une situation étant aussi traitée comme une immobilisation lorsque l'information indique une immobilisation du véhicule automobile, un premier signal d'état (Flag A) étant mis à "1" (S12) lorsqu'on passe au-dessous de la valeur prédéterminée, un troisième signal d'état (Flag B) étant mis à "1" (S24) lorsqu'on atteint ou passe au-dessous de la plus petite vitesse finie possible représentable (δ km/h) et un deuxième signal d'état (Flag C) étant mis à "1" (S28) par le système d'aide à la conduite lorsque l'immobilisation est détectée, le mode étant quitté lorsque au moins l'un des signaux parmi le deuxième signal d'état (Flag C) et le troisième signal d'état (Flag B) est mis à "1" (S30) et un autre événement (Y) est ou va être détecté (S32).

2. Procédé selon la revendication 1,
**caractérisé en ce que**
la valeur prédéterminée est égale à 1 km/h au maximum.

3. Procédé selon la revendication 1 ou 2,
**caractérisé en ce que**
la valeur prédéterminée est la plus petite valeur mesurable.
